# EUROPÄISCHE PATENTSCHRIFT

(11) **EP 0 453 723 B1**
(45) Veröffentlichungstag und Bekanntmachung des Hinweises auf die Patenterteilung: **22.06.1994**
(21) Anmeldenummer: 91102377.8
(22) Anmeldetag: 20.02.1991
(51) Int. Cl.: F16F 15/26, F02B 75/06

(54) **Lagerung von Ausgleichsmassen**
Support for balancing weights
Dispositif de support pour masses d'équilibrage

(30) Priorität: 04.04.1990 DE 4010856
(43) Veröffentlichungstag der Anmeldung: 30.10.1991
(73) Patentinhaber: MAN Nutzfahrzeuge Aktiengesellschaft, 80976 München (DE)
(72) Erfinder: Möller, Heribert,, W-8802 Sachsen (DE)

(56) Entgegenhaltungen:
- DE-A- 2 447 001
- DE-A- 2 829 042
- FR-A- 2 129 411
- GB-A- 2 104 971
- US-A- 3 667 317
- US-A- 4 300 493

## Beschreibung

Die Erfindung bezieht sich auf eine Lagerung von Ausgleichsmassen gemäß dem Oberbegriff des Patentanspruches 1.

Zum Ausgleich von Massenkräften zweiter Ordnung ist es nach US-PS 3 667 317 vorbekannt, zwei parallel zur Kurbelwelle liegende Ausgleichswellen vorzusehen, welche über einen Zahnkranz von der Kurbelwelle so angetrieben werden, daß sie gegenläufig sind und die doppelte Kurbelwellendrehzahl aufweisen. Ein Zahnkranz der Kurbelwelle ist auf eine der Symmetrieebene der Kurbelwelle benachbarten Kurbelwange aufgezogen und kämmt mit einem ersten Zahnrad der ersten Ausgleichswelle, während die zweite Ausgleichswelle von einem mit dem ersten Zahnrad kämmenden zweiten Zahnrad angetrieben wird. Mit diesen Ausgleichswellen sind Ausgleichsmassen drehfest verbunden. Die Ausgleichswellen sind zweifach im einem Gehäuse gelagert, welches seinerseits an ein Kurbelgehäuse angeflanscht ist. Ausgleichswellen, Zahnräder und Ausgleichsmassen sind zunächst getrennt und werden erst bei der Montage vereinigt. Daraus entsteht der Nachteil, daß eine für den vollkommenen Massenausgleich unabdingbare exakte und dauerhafte Zuordnung der Ausgleichsmassen und der Zahnräder schwer einzuhalten ist. Durch die beidseitige Lagerung ist der Massenausgleich auch nicht zwischen zwei benachbarten Zylindern unterzubringen, da er einerseits nicht zu lang werden darf, um eine Kollision mit der Ausgleichsmasse auf der Kurbelwange bzw. mit dem Pleuel zu vermeiden und andererseits der Durchmesser des mit der Kurbelwange verbundenen Zahnkranzes nicht zu groß gewählt werden kann, um eine Berührung eines Kolbens in UT-Stellung mit dem Zahnkranz auszuschließen. Dies heißt, daß die Ausgleichswelle nicht zu weit von der Kurbelwellenmitte entfernt sein kann und die Ausgleichsmasse dadurch in ihrer radialen Erstreckung einer Begrenzung unterworfen ist.

Ausgehend von einem Massenausgleich entsprechend dem Oberbegriff des Patentanspruches 1 liegt der Erfindung die Aufgabe zugrunde, die Lagerung der Ausgleichsmassen konstruktiv so zu gestalten, daß man unter Berücksichtigung des kleinstmöglichen Pleuelstangenstichmaßes mit den Drehachsen der Ausgleichsmassen möglichst nahe an die Kurbelwellenmitte herangehen kann und die Ausgleichsmassen trotzdem zwischen zwei benachbarten Zylindern unterzubringen sind.

Gelöst wird diese Aufgabe durch die kennzeichnenden Merkmale des Patentanspruches 1.

Durch die unmittelbare Lagerung der Ausgleichsmassen ist nur ein minimaler baulicher Aufwand für den Massenausgleich notwendig. Die Befestigung der Ausgleichsmassen auf der Ausgleichswelle entfällt ebenso, wie die unbedingt winkelgerechte Zuordnung von Ausgleichsmasse und Zahnrad, da erfindungsgemäß beide Teile eine stoffliche Einheit bilden. Durch die Anwendung einer Lagerbrille für die axiale Führung der Ausgleichsmassen erspart man sich die spanabhebende Bearbeitung der Innenseite des Gehäuses für den Anschlag der Ausgleichsmassen. Die Ringnut zur axialen Führung hingegen ist durch Einstich problemlos herstellbar. Durch Verzicht der Trennung von Ausgleichswelle und Ausgleichsmasse und ein separates Lagergehäuse baut die Lagerung der Ausgleichsmassen kürzer, so daß die Drehachse möglichst nahe an die Mitte der Kurbelwelle herangerückt werden kann, da das Pleuel nicht mit dem freien Ende der Ausgleichswelle kollidieren kann.

Vorteilhafte Weiterbildungen der Erfindung bestehen nach den Unteransprüchen 2 und 3 darin, daß die Einheit von Zahnrad und Ausgleichsmasse als Schmiede- oder Gußteil hergestellt wird. Dadurch läßt sich die Form der Ausgleichsmasse und die daraus resultierende Lage des Massenmittelpunktes freizügig wählen und ohne zusätzlichen Montageaufwand die winkelgerechte Zuordnung von Ausgleichsmasse und Zahnrad sicher und dauerhaft erzielen.

Weitere vorteilhafte Ausbildungen der Erfindung können den Unteransprüchen 4 und 5 entnommen werden.

Durch die Form der Ausgleichsmassen und die daraus resultierende Lage der Massenmittelpunkte können entweder die Massenkräfte ohne Einbringung von Massenmomenten ausgeglichen werden, oder aber es wird zusätzlich bewußt ein Ausgleich von Massenmomenten erzielt.

Ein Ausführungsbeispiel für eine Lagerung von Ausgleichsmassen ist in Zeichnungen dargestellt. Es zeigt:
- Figur 1: einen Schnitt I-I aus Figur 2 am Beispiel einer 4-Zylinder-Viertakt-Reihenbrennkraftmaschine mit um 180° versetzten Kurbelkröpfungen
- Figur 2: einen Schnitt II-II durch eine Lagerung gegenläufiger Ausgleichsmassen

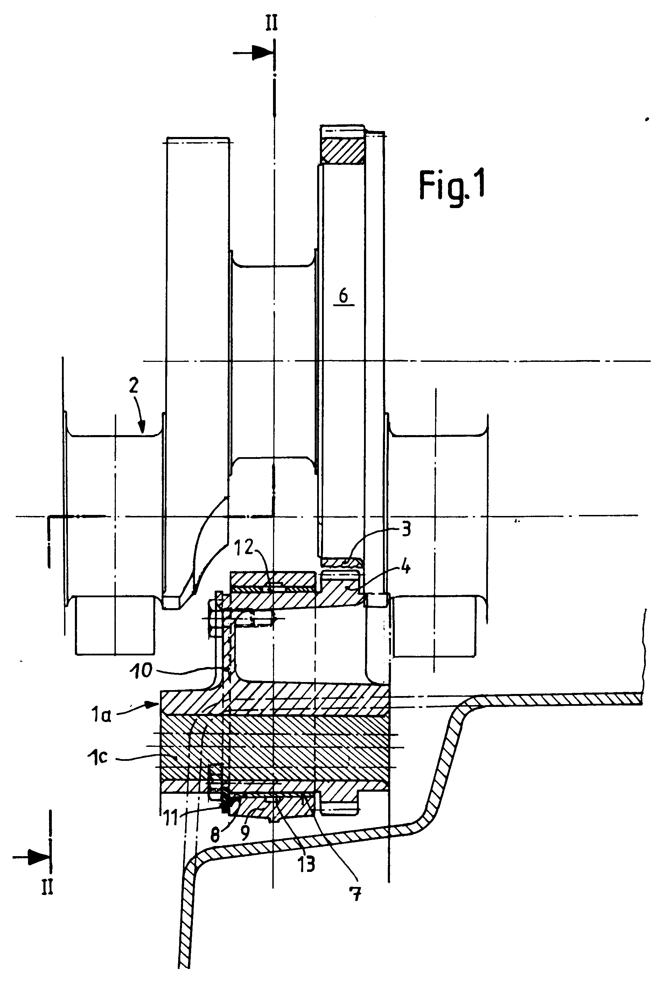

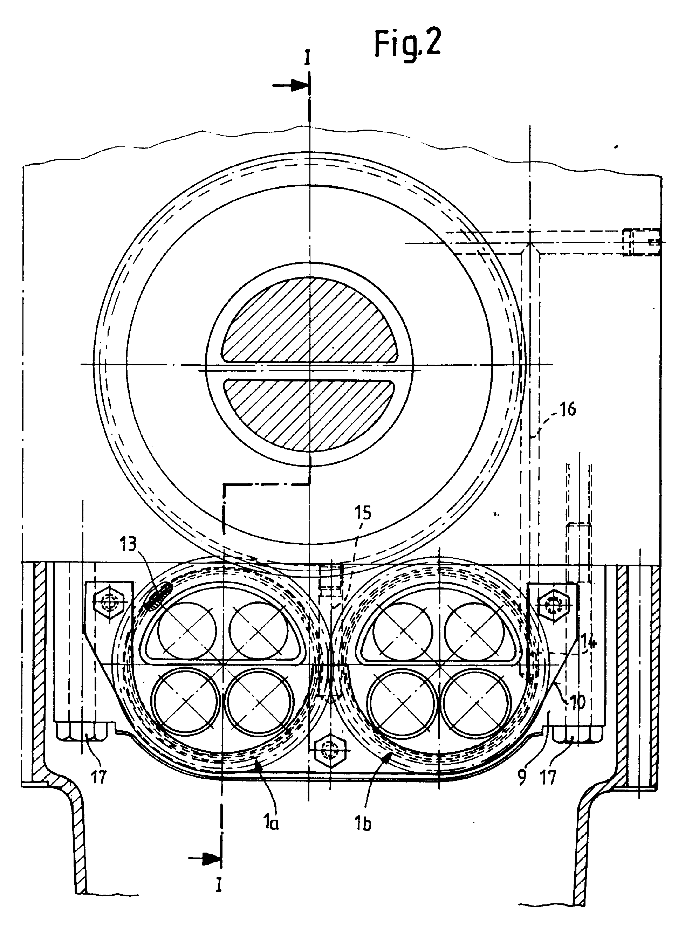

Figur 1 zeigt im Schnitt I-I aus Figur 2 eine erste Ausgleichsmasse 1a, welche von einer Kurbelwelle 2 über einen Zahnkranz 3 und ein erstes Zahnrad 4 angetrieben wird. Der Zahnkranz 3 ist dabei auf eine Kurbelwange 6 der Kurbelwelle 2 aufgezogen. Zum Ausgleich von Massenkräften oder Massenmomenten zweiter Ordnung beträgt das Verhältnis der Zähnezahlen von Zahnkranz 3 und erstem Zahnrad 4 2 : 1.

Zur ersten Auslgeichsmasse 1a ist eine gegenläufige zweite Ausgleichsmasse 1b (Figur 2) vorgesehen, welche vom ersten Zahnrad 4 mittels eines zweiten Zahnrades 5 mit gleicher Zähnezahl angetrieben wird.

Erfindungsgemäß bilden die Zahnräder 4 und 5 und die Ausgleichsmassen 1a und 1b (Figur 2) eine stoffliche Einheit, welche als Schmiede- oder Gußteil hergestellt werden kann. Durch diese stoffliche Einheit wird die bei der Montage umständliche winkelgerechte Zuordnung der Ausgleichsmassen 1a, 1b und der Zahnräder 4 und 5 vermieden, was bei Serienfertigung zu erheblicher Einsparung führt. Die Lagerung der Ausgleichsmassen 1a und 1b sei am Beispiel der Ausgleichsmasse 1a erläutert.

Die Ausgleichsmasse 1a ist an ihrer Umfangsfläche 7 als Lagerzapfen ausgebildet und unmittelbar mittels einer Lagerschale 8 in einem Gehäuse 9 gelagert. Das Gehäuse 9 wiederum ist mit dem nicht näher dargestellten Kurbelgehäuse verschraubt.

Zur axialen Führung der Ausgleichsmasse 1a dient eine Lagerbrille 10, welche in eine Ringnut 11 der Ausgleichsmasse 1a eingreift. Die Lagerbrille 10 wird stirnseitig an das Gehäuse 9 angeflanscht. Zur Schmierung der Lagerung ist in der Lagerschale 8 eine Schmierbohrung 12 vorgesehen, welcher das Schmieröl über eine ringförmig umlaufende Ölnut 13 im Gehäuse 9 zugeführt werden kann. Eine Unterbrechung der Schmierung durch Verdrehung der Lagerschale 8 gegenüber dem Gehäuse 9 wird dadurch zuverlässig vermieden.

Durch die unmittelbare Lagerung der Ausgleichsmasse 1a und die Einheit von Ausgleichsmasse 1a und erstem Zahnrad 4 wird eine gedrungene Bauart erzielt, welche im geringstmöglichen Abstand zur Kurbelwellenmitte angeordnet werden kann und deren Montage denkbar einfach ist. Die gegenseitige Fixierung von Ausgleichswelle, Ausgleichsmasse und Zahnrad wie es dem Stand der Technik entspricht wird vermieden, was sich insbesondere bei Serienfertigung positiv auswirkt.

Im dargestellten Beispiel eines Ausgleichs an einer 4-Zylinder-Viertakt-Reihenbrennkraftmaschine erfolgt der Antrieb der Ausgleichsmassen über den Zahnkranz 3 von der der Motormitte benachbarten Kurbelwange 6 aus. Durch die Gestaltung der Ausgleichsmassen 1a und 1b (Figur 2) liegen deren Massenmittelpunkte direkt in einer Mittelebene des Motors, so daß durch die Massenkräfte keinerlei Momente hervorgerufen werden. Für den Fall, daß auch der Ausgleich von Massenmomenten erwünscht ist können natürlich die Ausgleichsmassen auch so gestaltet sein, daß ihre Massenmittelpunkte außerhalb der Symmetrieebene liegen und Gegenmomente bewirken. Zur Erhöhung der Massenkräfte können die Ausgleichsmassen 1a, 1b mit Bohrungen 1c versehen werden, welche mit Schwermetall wie z. B. Blei ausgegossen werden oder es werden Schwermetallstäbe eingepreßt.

Ein Schnitt II-II im Bereich der gegenläufigen Ausgleichsmassen 1a und 1b ist aus Figur 2 zu ersehen. Um die Reibmomente der an ihrem Umfang gelagerten Ausgleichsmassen zu verringern und ein Fressen zu vermeiden ist die Schmierung der Ausgleichsmasse 1b über eine Bohrung 14 in den Schmierkreislauf der Brennkraftmaschine eingebunden. Das Schmieröl gelangt von einer Schmierbohrung 16 zu der Bohrung 14 über die Ölnut 13 im Gehäuse 9 der Ausgleichsmasse 1b und eine Schmierbohrung 12 (Figur 1) zu dem Schmierspalt zwischen Ausgleichsmasse 1b und Lagerschale 9. Die Ölnut 13 entspricht der mit gleichem Bezugszeichen versehenen Ölnut 13 der in Figur 1 beschriebenen Ausgleichsmasse 1a. Eine Verbindungsbohrung 15 zwischen den Ölnuten 13 stellt die Verbindung des Schmierölkreislaufes von einer Ausgleichsmasse zur anderen her.

Die der axialen Führung dienende Lagerbrille 10 wird stirnseitig an das Gehäuse 9 angeflanscht und das Gehäuse 9 an das Kurbelgehäuse mittels Schrauben 17 angeschlossen.

Die unmittelbare Lagerung der Ausgleichsmassen 1a und 1b im Gehäuse 9 in Verbindung mit der stofflichen Einheit der Ausgleichsmassen 1a und 1b und der Zahnräder 4 und 5 ermöglicht einfachste Montage und geringste axiale Erstreckung der Lagerung im Bereich der Drehachse der Ausgleichsmassen.

## Patentansprüche

1. Lagerung von Ausgleichsmassen zum Ausgleich von Massenkräften, bzw. Massenmomenten zweiter Ordnung, bei der die Ausgleichsmassen in einem Gehäuse gelagert sind welches an ein Kurbelgehäuse angeflanscht ist und der Antrieb der Ausgleichsmassen durch einen Zahnkranz erfolgt, wobei dieser Zahnkranz mit einer Kurbelwange verbunden ist, welche einer Symmetrieebene einer Kurbelwelle benachbart ist und der Zahnkranz mit einem ersten Zahnrad kämmt, wobei dieses drehfest mit einer ersten Ausgleichsmasse verbunden ist und das zweite Zahnrad wiederum mit einem dritten Zahnrad im Eingriff steht welches dem Antrieb einer zweiten Ausgleichsmasse dient, dadurch gekennzeichnet, daß die Ausgleichsmassen (1a, 1b) selbst an ihrer Umfangsfläche (11) als Lagerzapfen ausgebildet sind, so daß die Ausgleichsmassen (1a, 1b) unmittelbar über Lagerschalen (8) im Gehäuse (9) radial geführt sind und die axiale Führung von einer Lagerbrille (10) übernommen wird, die an einer freien Stirnseite des Gehäuses (9) angeschraubt ist und in Ringnuten (11) der Ausgleichsmassen (1a, 1b) eingreift, daß die Ausgleichsmassen mit den Zahnrädern (4, 5) eine stoffliche Einheit bilden, und daß zur Schmierung das die Lagerschalen (8) umgebende Gehäuse (9) ringförmige Ölnuten (13) aufweist, welche über eine Bohrung (14) im Gehäuse (9) und einer Schmierleitung (16) in den Schmierkreislauf eingebunden ist.

2. Lagerung nach Anspruch 1, dadurch gekennzeichnet, daß zur Herstellung der Einheit von Zahnrädern (4, 5) und Ausgleichsmassen (1a, 1b) das Teil als Schmiedestück gefertigt ist.

3. Lagerung nach Anspruch 1, dadurch gekennzeichnet, daß zur Herstellung der Einheit von Zahnrädern (4, 5) und Ausgleichs(1a, 1b) das Teil als Gußteil gefertigt ist.

4. Lagerung nach Anspruch 1, dadurch gekennzeichnet, daß zum ausschließlichen Ausgleich von Massenkräften die Ausgleichsmassen (1a, 1b) so gestaltet sind, daß ihre Massenmittelpunkte in einer Symmetrieebene einer Kurbelwelle zu liegen kommen.

5. Lagerung nach Anspruch 1, dadurch gekennzeichnet, daß zum zusätzlichen Ausgleich von Massenmomenten die Ausgleichsmassen (1a, 1b) so gestaltet sind, daß ihre Massenmittelpunkte um einen solchen Betrag aus der Symmetrieebene herausgerückt sind, daß das Produkt aus Massenkraft und dem Betrag das Massenmoment ganz oder teilweise kompensiert.

## Claims

1. A bearing arrangement of balancing weights for balancing forces or moments of inertia of the second order, in which the balancing weights are supported in a housing flanged to a crankcase and the balancing weights are driven by a ring gear connected to a crank web adjacent to a plane of symmetry of a crankshaft and the ring gear meshing with a first gear wheel, wherein the first gear wheel is connected in a rotationally fixed manner to a first balancing weight and the second gear wheel in turn engages with a third gear wheel, which serves to drive a second balancing weight, characterised in that the balancing weights (1a, 1b) are themselves formed as bearing journals on the peripheral surface (11) thereof, so that the balancing weights (1a, 1b) are guided radially in the housing (9) directly via bearing shells (8) and the axial guidance is provided by a bearing rest (10) screwed onto a free front side of the housing (9) and engaging in annular grooves (11) of the balancing weights (1a, 1b), in that the balancing weights form a material unit together with the gear wheels (4, 5), and in that the housing (9) surrounding the bearing shells (8) has annular oil grooves (13) for lubrication, which are integrated into the lubrication circuit via a borehole (14) in the housing (9) and a lubrication pipeline (16).

2. A bearing arrangement according to Claim 1, characterised in that, in order to produce the unit of gear wheels (4) and balancing weights (1a, lb), the part is manufactured as a forged piece.

3. A bearing arrangement according to Claim 1, characterised in that, in order to produce the unit of gear wheels (4, 5) and balancing weights (la, 1b), the part is manufactured as a cast part.

4. A bearing arrangement according to Claim 1, characterised in that, in order to balance forces of inertia exclusively, the balancing weights (1a, 1b) are designed so that their centres of inertia lie in a plane of symmetry of a crankshaft.

5. A bearing arrangement according to Claim 1, characterised in that, in order to balance moments of inertia as well, the balancing weights (1a, 1b) are designed so that their centres of inertia are moved out of the plane of symmetry by such an amount that the product of the force of inertia and the said amount completely or partially compensate for the moment of inertia.

## Revendications

1. Montage de masses d'équilibrage pour équilibrer des forces dues aux masses ou des moments d'inertie de deuxième ordre, dans laquelle les masses d'équilibrage sont montées dans un boîtier, qui est bridé sur un carter de vilebrequin et dans lequel l'entraînement des masses d'équilibrage a lieu au moyen d'une couronne dentée, cette couronne dentée étant reliée à un flasque de manivelle, qui est voisin d'un plan de symétrie d'un arbre de vilebrequin, la couronne dentée engrène avec une première roue dentée, celle-ci étant reliée de façon solidaire en rotation avec une première masse d'équilibrage et la deuxième masse d'équilibrage étant à son tour en prise avec une troisième roue dentée qui sert à l'entraînement d'une deuxième masse d'équilibrage, montage de masses d'équilibrage caractérisée en ce que les masses d'équilibrage (1a, 1b) elles-mêmes sont constituées sur leur surface périphérique (11) sous la forme de tourillons, de telle sorte que les masses d'équilibrage (1a, 1b) soient guidées directement par l'intermédiaire de coussinets (8) dans le boîtier (9) de façon radiale, et que le guidage axial soit assumé par une lunette de palier (10), qui est vissée à une extrémité frontal libre du boîtier (9) et vient en prise dans des rainures annulaires (11) des masses d'équilibrage (1a, 1b), en ce que les masses d'équilibrage forment avec les roues dentées (4, 5) une unité matérielle et en ce que pour la lubrification le boîtier (9), qui entoure les coussinets (8), présente des rainures d'huile (13) de forme annulaire, rainures qui sont reliées par un perçage (14) dans le boîtier (9) et une conduite de lubrification (16) dans le circuit de lubrification.

2. Montage selon la revendication 1, caractérisé en ce que pour fabriquer l'unité se composant des roues dentées (4, 5) et des masses d'équilibrage (1a, 1b) on réalise la pièce sous forme d'une pièce forgée.

3. Montage selon la revendication 1, caractérisé en ce que pour fabriquer l'unité se composant des roues dentées (4, 5) et des masses d'équilibrage (1a, 1b), on réalise la pièce sous forme d'une pièce de fonderie.

4. Montage selon la revendication 1, caractérisé en ce que pour l'équilibrage exclusif des forces dues aux masses on donne aux masses d'équilibrage (1a, 1b) une configuration telle que les centres des masses se trouvent dans un plan de symétrie d'un arbre de vilebrequin.

5. Montage selon la revendication 1, caractérisé en ce que pour équilibrer en plus les moments d'inertie on donne aux masses d'équilibrage (1a, 1b) une configuration telle que leurs centres de masse soient déportées à partir du plan de symétrie d'une valeur telle que le produit de la force due aux masses et de cette quantité compense totalement ou partiellement le moment d'inertie.
